# EUROPEAN PATENT APPLICATION

(11) **EP 3 789 185 A1**
(43) Date of publication of application: **10.03.2021**
(21) Application number: 20193069.0
(22) Date of filing: 27.08.2020
(51) Int. Cl.: B29C 64/40, B29C 64/124, B29C 64/153, B29C 64/386, B33Y 10/00

(54) **METHOD OF FABRICATING THREE-DIMENSIONAL OBJECT, MODELING PROGRAM, METHOD OF GENERATING MODEL OF OBJECT, OBJECT FABRICATION APPARATUS, AND THREE-DIMENSIONAL OBJECT**

(30) Priority: 03.09.2019 JP 2019160053
(71) Applicant: NABTESCO CORPORATION, Chiyoda-ku Tokyo 102-0093 (JP)
(72) Inventor: MURAKAMI, Hiroya, Chiyoda-ku, Tokyo 102-0093 (JP); NAKATA, Masato, Chiyoda-ku, Tokyo 102-0093 (JP)
(74) Representative: Grünecker Patent- und Rechtsanwälte PartG mbB

(57) **Abstract**

A three-dimensional object (40) is fabricated by repeating a process that includes depositing a layer of an unsolidified material with a predetermined thickness on a vertically-movable elevator table (22) by a recoater (23), selectively solidifying the layer of the unsolidified material by irradiating the unsolidified material with ultraviolet light, a laser beam, or an electron beam, and thereafter lowering the elevator table (22) by one step. The method includes a step of providing a layer of the unsolidified material between a structure (41) that is a part of the three-dimensional object (40) being fabricated and a support (42) that is provided to prevent the structure (41) from being deformed by gravity or external force.

## Description

The present invention relates to a method of fabricating a three-dimensional object, a modeling program, a method of generating a model of an object, an object fabrication apparatus, and a three-dimensional object.

There has been known an apparatus for fabricating a three-dimensional object by applying a laser to a photocurable resin as described in Japanese Patent Application Publication No. 2002-46188 ("the '188 Publication"). The apparatus fabricates a three-dimensional object by curing layers of resin corresponding to a series of slices of the three-dimensional object by applying laser layer by layer.

According to the fabrication method described in the '188 Publication, a powder of solidified photocurable resin is mixed in a liquid photocurable resin in order to increase the viscosity. Thereby a three-dimensional object having an overhanging feature that is not supported from below is fabricated without using a support structure called as a support.

Whether a solid-liquid mixed resin or only a liquid resin is used as a raw material, for an overhanging structure that has a hollow space situated thereunder, such as an eaves, dimensions of a fabricated object tend to deviate from a designed shape. It is desired to develop a technique for reduce such a deviation from the designed shape. Not only in the additive manufacturing methods using photocurable resins, but also in an additive method using a powder material such as a metal powder, it is desired to minimize a deviation from the designed shape.

The present invention has been made in view of above, and one object of the invention is to provide a method of fabricating a three-dimensional object, a modeling program, a method of generating an object model, an object fabrication apparatus, and a three-dimensional object, with which a deviation from a designed shape is minimized.

A method of fabricating a three-dimensional object according to one aspect of the invention fabricates a three-dimensional object by repeating a process that includes depositing a layer of a material with a predetermined thickness on a vertically-movable elevator table by a recoater, selectively solidifying the layer of the material by irradiating the material with ultraviolet light, a laser beam, or an electron beam, and thereafter lowering the elevator table by one step. The method includes a step of providing a layer of the unsolidified material between a structure that is a part of the three-dimensional object being fabricated and a support that is provided to prevent the structure from being deformed by gravity or external force.

According to the method, the three-dimensional object is fabricated while the structure is supported by the support and the unsolidified material provided between the structure and the support. Therefore, it is possible to prevent the shape of the structure from deviating from the designed shape.

In the method, it is preferable that the support be fabricated at a position apart from the structure by a predetermined distance.

According to the above method, the structure is fabricated while the support does not contact the structure. Therefore, it is possible to prevent the shape of the structure from deviating from the designed shape.

In the above method, it is preferable that the position separated by the predetermined distance from the structure be determined based on at least one selecting from a group consisting of the intensity of ultraviolet light, a laser beam, or an electron beam, the scanning speed, the viscosity of the material, and the rigidity of the material. In this way, it is possible to fabricate the support at an appropriate position and to prevent the shape of the structure from deviating from the designed shape.

In the above method, it is preferable that the support be fabricated such that the support partially contacts at least one of a side surface and a lower portion of the structure.

In this way, the fabricated support minimizes the area of contact with the structure and limits deviation of the shape of the structure from the designed shape. In this manner, the minimized contact area between the structure and the support minimizes the area where the structure and the support are cut apart and improves the transparency of the structure.

In the above method, it is preferable that the support be fabricated to be box-shaped under the structure, and the unsolidified material is disposed in a space defined at least by the structure and the support. In this way, the support, which is fabricated to minimize the area of contact with the structure, limits deviation of the shape of the structure from the designed shape. More specifically, the structure and the support are fabricated to have the minimum contact area (i.e., area of edge of box-shaped support) that allows for the formation of the closed space, in which the liquid photocurable resin is disposed between the structure and the support. Accordingly, the support and the liquid photocurable resin in the space, which is defined between the structure and the support, support the structure and limits deviation of the shape of the structure from the designed shape. Further, the contact area between the structure and the support is limited to only the area of the edge of the box-shaped support. This minimizes the area where the structure and the support are cut apart and improves the transparency of the structure.

A modeling program according to another aspect of the invention causes a computer to perform the steps of: acquiring three-dimensional shape data of a desired structure; generating a three-dimensional shape data of a support such that a layer of an unsolidified material is provided between the structure and the support, the support being provided to prevent the structure from being deformed by gravity or external force; and generating slice data for additive manufacturing based on the three-dimensional shape data of the structure and the support.

The three-dimensional object is fabricated using the above program while the structure is supported by the support and the unsolidified material provided between the structure and the support. Therefore, it is possible to prevent the shape of the structure from deviating from the designed shape.

A method of generating a model of an object according to yet another aspect of the invention includes a step of acquiring three-dimensional shape data of a desired structure; and a step of generating a three-dimensional shape data of a support such that a layer of an unsolidified material is provided between the structure and the support, the support being provided to prevent the structure from being deformed by gravity or external force.

The three-dimensional object is fabricated using the above method while the structure is supported by the support and the unsolidified material provided between the structure and the support. Therefore, it is possible to prevent the shape of the structure from deviating from the designed shape.

A fabrication apparatus for an object according to still yet another aspect of the invention includes: a recoater depositing a layer of a material with a predetermined thickness; an irradiation unit irradiating the material deposited by the recoater with ultraviolet light, a laser beam, or an electron beam to selectively solidify the material; an elevator table movable vertically and on which a desired structure and a support are fabricated, the support being provided to prevent deformation of the structure by gravity or external force; and a control unit controlling fabrication of the structure and the support such that a layer of the unsolidified material is provided between the structure and the support.

With this configuration, the three-dimensional object is fabricated while the structure is supported by the support and the unsolidified material provided between the structure and the support. Therefore, it is possible to prevent the shape of the structure from deviating from the designed shape.

A three-dimensional object according to another aspect of the invention is fabricated by the steps of: acquiring three-dimensional shape data of a desired structure; generating a three-dimensional shape data of a support such that a layer of an unsolidified material is provided between the structure and the support, the support being provided to prevent the structure from being deformed by gravity or external force; generating slice data for additive manufacturing based on the three-dimensional shape data of the structure and the support; and fabricating the structure and the support.

With this configuration, the three-dimensional object is fabricated while the structure is supported by the support and the unsolidified material provided between the structure and the support. Therefore, it is possible to prevent the shape of the structure from deviating from the designed shape.
Fig. 1 illustrates a schematic configuration of a fabrication apparatus for an object.
Fig. 2 is a block diagram showing a method of generating a model of the object.
Fig. 3 is a flowchart showing a method of fabricating a three-dimensional object.
Fig. 4 schematically illustrates a first embodiment of a three-dimensional object.
Fig. 5 schematically illustrates a second embodiment of a three-dimensional object.
Fig. 6 schematically illustrates a third embodiment of a three-dimensional object.

### First Embodiment

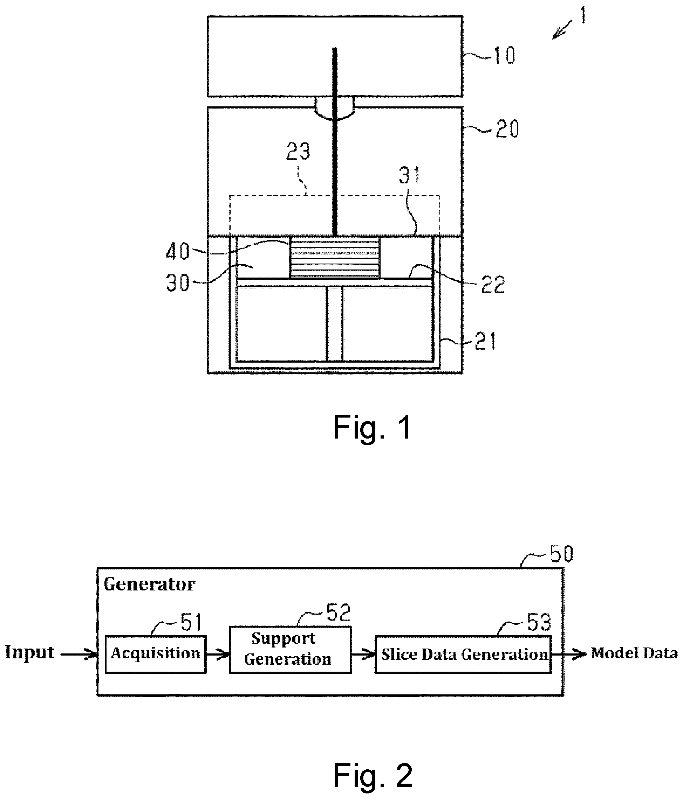

With reference to Fig. 1 to Fig. 4, the following describes a first embodiment of a fabrication apparatus for an object. The fabrication apparatus fabricates a shaped three-dimensional object by a method of fabricating a three-dimensional object. Data for fabrication of the three-dimensional object is generated using a modeling program and a method of generating a model of the object.

As shown in Fig. 1, the fabrication apparatus 1 for a three-dimensional object includes a fabrication unit 20 that fabricates a three-dimensional shaped object. The fabrication unit 20 includes a liquid tank 21 filled with a liquid photocurable resin 30 as a curable material, an elevator table 22 that is movable vertically in the liquid tank 21, and a recoater 23 that deposits a layer of the photocurable resin 30 in a predetermined thickness on the elevator table 22. The fabrication apparatus 1 further includes a laser irradiation unit 10 that irradiates the photocurable resin 30 on the elevator table 22 with laser beam.

The elevator table 22 is lowered by one layer thickness each time a layer of the photocurable resin 30 is cured. After one layer of the photocurable resin 30 is cured, the recoater 23 moves along a surface 31 of the liquid photocurable resin 30 to introduce the liquid photocurable resin 30 on the cured photocurable resin 30. The surface 31 of the liquid photocurable resin 30 is irradiated with a laser beam.

The laser irradiation unit 10 uses a scan system such as a galvanometer mirror to scan a laser beam emitted from an unshown laser oscillator so as to illuminates a desired position on the surface 31 of the liquid photocurable resin 30 with the laser beam. The fabrication apparatus 1 fabricates a three-dimensional object 40 by curing the photocurable resin 30 layer by layer based on model data. The model data is slice data obtained by slicing a model of the three-dimensional object 40 represented by three-dimensional shape data into a series of layers.

### Generation of Model Data

Generation of model data will be now described.

Referring to Fig. 2, a generator 50 generates the model data. The generator 50 is a computing device such as a computer in which a model data generation program is implemented. The generator 50 is configured as a circuitry including one or more processors that execute various processes in accordance with a computer program(s) (software). Alternatively, the generator 50 may be configured as one or more dedicated hardware circuits such as application-specific integrated circuits (ASICs) that perform at least a part of various processes, or it may be a circuitry including a combination of such circuits. The processor includes a CPU and a memory such as a RAM or a ROM. The memory stores program codes or instructions configured to cause the CPU to perform processes. The memory, in other words, a computer-readable medium, encompasses any kind of available medium accessible by a general-purpose or dedicated computer.

The generator 50 includes an acquisition unit 51 that acquires data on a three-dimensional shape of a structure corresponding to a desired three-dimensional object, and a support generation unit 52 that generates data on a three-dimensional shape of a support that supports the structure. In response to input of the three-dimensional shape data to the generator 50, the acquisition unit 51 determines whether the acquired three-dimensional shape data includes an unstable feature. Here, the unstable feature is a shape that causes a deviation from the designed shape due to its own weight or displacement of the recoater 23 after being cured by laser irradiation. As data for determining the unstable shape, data obtained by simulation or through an actual object is used. When the acquisition unit 51 determines that the unstable feature is included, the support generation unit 52 generates three-dimensional shape data of a support to add the support to the structure.

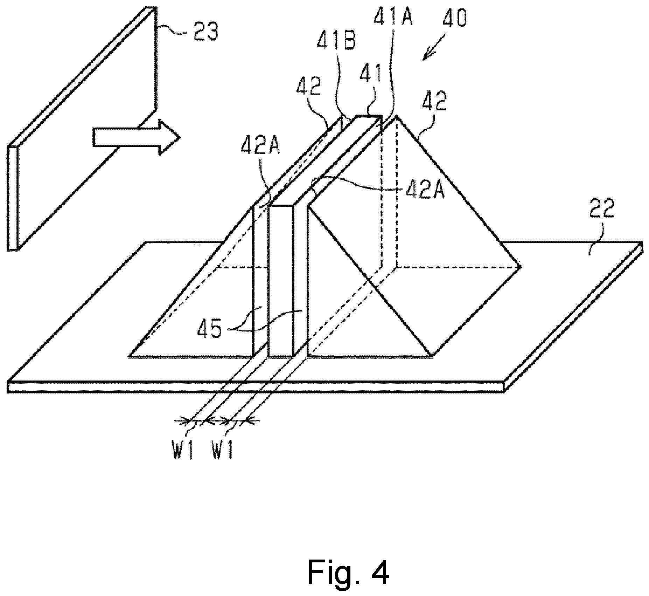

Here, as shown in Fig. 4, a structure 41 corresponding to a desired three-dimensional object is a rectangular parallelepiped object, and is fabricated on the elevator table 22 as it stands upright thereon. The longitudinal direction of the structure 41 is parallel to the longitudinal direction of the recoater 23 and perpendicular to the moving direction of the recoater 23. Therefore, there is a possibility that the structure may be bent in the vertical direction of the elevator table 22 due to the movement of the recoater 23 during fabrication of the structure. To address this, the support 42 is formed together with the structure 41 in order to prevent deformation of the structure 41 due to gravity or external force.

The support 42 in the embodiment includes two objects having a triangular prism shape. The longitudinal direction of the support 42 is arranged parallel to the elevator table 22. The two supports 42 are disposed parallel to the structure 41 and face side surfaces 41A and 41B of the structure 41 having the largest area respectively. Aside surface 42A of the support 42 parallel to the recoater 23 is disposed apart from the side surfaces 41A and 41B of the structure 41 by a gap 45. The support 42 is fabricated at a position apart from the structure 41 by a predetermined distance W1 without contacting the structure 41. As a result, unsolidified liquid photocurable resin 30 is disposed in the gap 45 between the fabricated structure 41 and the support 42, so that the structure 41 is supported by the unsolidified photocurable resin 30 and the support 42. The position separated by the predetermined distance W1 from the structure is determined based on at least one selecting from a group consisting of the intensity of the laser beam, the scanning speed, the viscosity of the photocurable resin 30, and the rigidity of the photocurable resin 30. The intensity of the laser beam depends on the power of the laser beam and an irradiation time. The viscosity of the photocurable resin 30 refers to the viscosity in a fluid state before the photocurable resin 30 is irradiated with the laser beam. The rigidity of the photocurable resin 30 refers to the rigidity when the photocurable resin 30 has no fluidity after being irradiated with the laser beam and solidified.

As shown in Fig. 2, the generator 50 further includes a slice data generation unit 53 that generates slice data for additive manufacturing performed by the fabrication apparatus 1 from the three-dimensional shape data of the three-dimensional object 40 including the structure 41 and the support 42. The slice data generation unit 53 generates slice data as model data from the three-dimensional shape data including the three-dimensional shape data of the structure 41 and the three-dimensional shape data of the support 42. When the support 42 is unnecessary, the slice data generation unit 53 generates slice data from the three-dimensional shape data of the structure 41 as the model data. The slice data generation unit 53 outputs the generated model data to the fabrication apparatus 1.

### Method of Generating Model Data

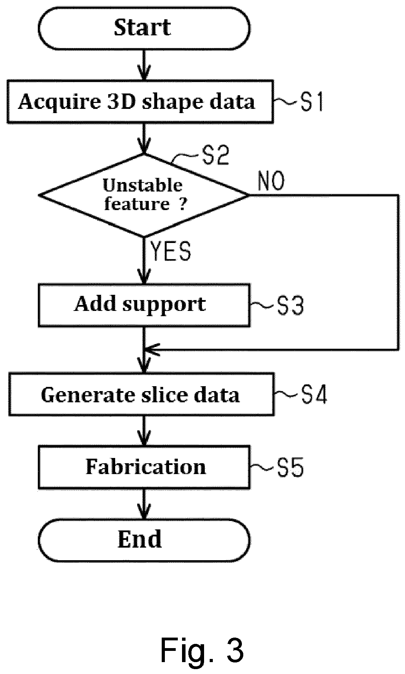

With reference to Fig. 3, a method of generating model data by the generator 50 configured as described above will be described.

As shown in Fig. 3, the generator 50 acquires the three-dimensional shape data (step S1). Specifically, the acquisition unit 51 acquires the three-dimensional shape data of the structure 41 input as a desired three-dimensional object. Note that step S1 corresponds to an acquisition step.

Next, the generator 50 determines whether the acquired structure 41 includes the unstable feature (step S2). Specifically, it is determined from the three-dimensional shape data of the structure 41 whether or not the structure 41 has a feature that causes a deflection or deviation from the designed shape during fabrication of the structure 41. Then, when the acquisition unit 51 determined that the acquired structure 41 does not include the unstable feature (step S2: NO), the acquisition unit 51 proceeds to step S4.

Whereas when the acquisition unit 51 determined that the acquired structure 41 includes the unstable shape (step S2: YES), the support 42 that is provided for preventing deformation of the structure 41 due to gravity or external force is added (step S3). Specifically, the support generation unit 52 generates the three-dimensional shape data of the support 42 in order to add the support 42 to the structure 41. The three-dimensional shape data of the support 42 is generated such that layers of the unsolidified photocurable resin 30 are provided between the structure 41, which is a part of the three-dimensional object being fabricated, and the support 42. Note that step S3 corresponds to a support generation step.

The generator 50 then generates slice data from the three-dimensional shape data of the model of the three-dimensional object 40 including the structure 41 and the support 42 (step S4). The slice data generation unit 53 generates the slice data as model data from the three-dimensional shape data including the three-dimensional shape data of the structure 41 and the three-dimensional shape data of the support 42. The generator 50 outputs the generated model data to the fabrication apparatus 1. Note that step S4 corresponds to a slice data generation step.

### Method of Fabricating Three-Dimensional Object

A fabrication process in step S5 performed by the fabrication apparatus 1 will be described.

As shown in Fig. 1, in the fabrication apparatus 1, the elevator table 22 is lowered to the point where an upper surface of the elevator table 22 is situated immediately below the surface 31 of the liquid photocurable resin 30. Then, the surface 31 of the liquid photocurable resin 30 is irradiated with the laser beam to cure one layer of the resin in the fabrication apparatus 1. After the layer is solidified, the elevator table 22 lowers one layer and the surface 31 of the liquid photocurable resin 30 is irradiated with the laser beam to cure another layer in the fabrication apparatus 1. The fabrication apparatus 1 repeats the above process to build the three-dimensional object 40.

As shown in Fig. 4, the fabrication apparatus 1 for a three-dimensional object in this embodiment fabricates a rectangular parallelepiped plate in an upright state as the structure 41 on the elevator table 22. The structure 41 is formed such that it builds up in a direction orthogonal to the moving direction of the recoater 23. Therefore, the structure 41 may deviates from the designed shape in the moving direction of the recoater 23 due to the movement of the recoater 23. The deviation from the designed shape is prevented by fabricating the structure 41 together with the support 42.

The support 42 is fabricated at a position apart from the structure 41 by the predetermined distance W1. The gap 45 of the predetermined distance W1 is provided between the structure 41 and the support 42. When the fabrication apparatus 1 is fabricating the three-dimensional object 40 layer by layer, the liquid photocurable resin 30 is provided in the gaps 45 between the support 42 and the structure 41. Therefore, even when a pressure applies from the recoater 23 through the liquid photocurable resin 30 when the recoater 23 moves, the structure 41 is supported by the supports 42 and the liquid photocurable resin 30 situated in the gaps 45. In this way, it is possible to prevent deviation of the structure 41 from the designed shape.

When fabrication of the three-dimensional object 40 is completed, the supports 42 included in the three-dimensional object 40 are removed and only the structure 41 is left. Subsequently the structure 41, which is the three-dimensional object 40, is subjected to post-treatments such as cleaning, UV treatment and heat treatment. As described above, a desired three-dimensional shaped object is obtained.

The liquid photocurable resin 30 is provided between the structure 41 and the support 42 during fabrication of the three-dimensional object. The structure 41 is supported by the supports 42 and the liquid photocurable resin 30 situated between the structure 41 and the support 42. Therefore, it is possible to prevent the shape of the structure 41 from deviating from the designed shape. Further, since the structure 41 and the supports 42 are formed in a non-contact manner, it is not necessary to separate the structure 41 from the supports 42 by cutting so that damage to the structure 41 caused by cutting can be prevented. In addition, the transparency of the structure 41 can be improved.

Advantageous effects of the first embodiment will be now described.
(1-1) The structure 41 is supported by the support 42 and the uncured photocurable resin 30 situated between the structure 41 and the support 42 during fabrication of the three-dimensional object 40. Therefore, it is possible to prevent the shape of the structure 41 from deviating from the designed shape. Further, the area in which the support 42 contacts the structure 41 can be reduced.
(1-2) The support 42 is fabricated at a position apart from the structure 41 by the predetermined distance W1 without contacting the structure 41. Therefore, it is possible to prevent the shape of the structure 41 from deviating from the designed shape while the support 42 does not contact the structure 41.
(1-3) The position separated by the predetermined distance W1 from the structure is determined based on at least one selecting from a group consisting of the intensity of the laser beam, the scanning speed, the viscosity of the photocurable resin 30, and the rigidity of the photocurable resin 30. Therefore, it is possible to fabricate the support 42 at an appropriate position and to further prevent the shape of the structure 41 from deviating from the designed shape.

### Second Embodiment

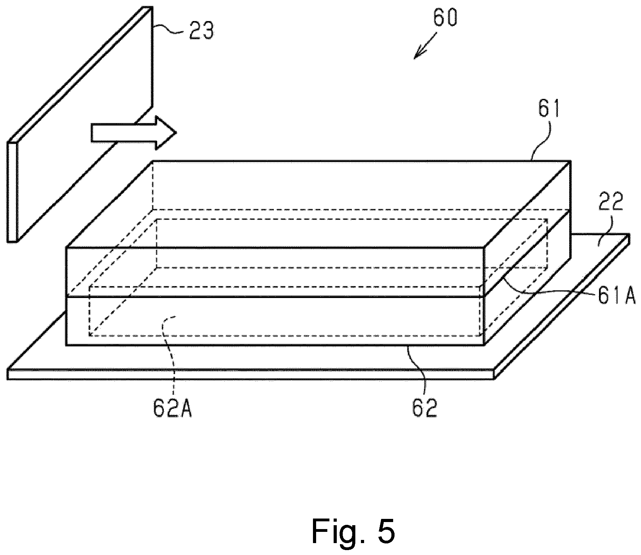

Hereinafter, a second embodiment of a method of fabricating a three-dimensional object, a modeling program, a method of generating an object model, an object fabrication apparatus, and a three-dimensional object will be described with reference to Fig. 5. In the method of fabricating a three-dimensional object of the second embodiment, the shapes of the structure and the support are different from those of the first embodiment. The following description will be focused on differences from the first embodiment.

Here, as shown in Fig. 5, a structure 61 corresponding to a desired three-dimensional object is a rectangular parallelepiped object, and is fabricated on the elevator table 22 with its largest surface being parallel to and separated from the plane of the elevator table 22. The longitudinal direction of the structure 61 is parallel to the moving direction of the recoater 23. Therefore, there is a possibility that the structure 61 may be bent in the horizontal direction of the elevator table 22 due to the self-weight of the structure 61 and/or the movement of the recoater 23 during fabrication of the structure. To address this, a support 62 is formed together with the structure 61 in order to prevent deformation of the structure 61 due to gravity or external force.

The support 62 is a box-shaped object formed under the structure 61 and an unsolidified photocurable resin 30 is disposed in a space defined at least by the structure 61 and the support 62. The longitudinal direction of the support 62 is arranged parallel to the elevator table 22. The support 62 is disposed parallel to the structure 61 and under a bottom surface 61A of the structure 61 having the largest area. The support 62 has a box shape. Therefore, the inside of the support 62 is a hollow space 62A. That is, the structure 61 and the support 62 are formed such that only the edge of the bottom surface 61A of the structure 61 contacts the support 62. The support 62 is not limited to a box shape. For example, the support 62 may be formed in a rectangular frame shape whose bottom is covered with the surface of the elevator table 22. As described above, unsolidified liquid photocurable resin 30 is disposed in the space 62A of the fabricated support 62, so that the structure 61 is supported by the unsolidified photocurable resin 30 and the support 62. In particular, the structure 61 situated over the space 62A of the fabricated support 62 is supported by the unsolidified liquid photocurable resin 30.

As shown in Fig. 2, the fabrication apparatus 1 performs additive manufacturing using three-dimensional shape data of a three-dimensional object 60 that includes the structure 61 and the support 62 generated by the slice data generation unit 53. The three-dimensional shape data of the support 62 is generated such that layers of the unsolidified photocurable resin 30 are provided between the structure 61, which is a part of the three-dimensional object being fabricated, and the support 62. The slice data generation unit 53 generates slice data as model data from the three-dimensional shape data including the three-dimensional shape data of the structure 61 and the three-dimensional shape data of the support 62. The slice data generation unit 53 outputs the generated model data to the fabrication apparatus 1.

### Method of Fabricating Three-Dimensional Object

A fabrication process performed by the fabrication apparatus 1 will be described.

When the fabrication apparatus 1 is fabricating the three-dimensional object 60 layer by layer, the liquid photocurable resin 30 is provided in the space 62A between the support 62 and the structure 61. Therefore, even when a pressure applies from the recoater 23 through the liquid photocurable resin 30 when the recoater 23 moves, the structure 61 is supported by the support 62 and the liquid photocurable resin 30 situated in the space 62A. In this way, it is possible to prevent deviation of the structure 61 from the designed shape.

When the fabrication of the three-dimensional structure 60 is completed, a hole is made in the support 62 and the liquid photocurable resin 30 in the space 62A of the support 62 is drained from the space 62A through the hole. The support 62 may be configured to include a plug in advance.

Subsequently the support 62 included in the three-dimensional object 60 is removed and only the structure 61 is left. The structure 61 of the three-dimensional object 60 is subjected to post-treatments such as cleaning, UV treatment and heat treatment. As described above, a desired three-dimensional shaped object is obtained.

The liquid photocurable resin 30 is provided between the structure 61 and the support 62 during fabrication of the three-dimensional object. In this way, it is possible to support the structure 61 by the support 62 and the liquid photocurable resin 30 provided between the structure 61 and the support 62 in order to prevent a deviation from the designed shape of the structure 61. Therefore, it is possible to prevent the shape of the structure 61 from deviating from the designed shape. Further, a contact area between the structure 61 and the support 62 is limited to the edge thereof so that cutting area to separate the structure 61 from the support 62 can be reduced and the transparency of the structure 61 can be improved.

According to the second embodiment, the following advantageous effects are obtained in addition to the effect of (1-1) above.
(2-1) The support 62 is fabricated such that only the edge of the bottom surface 61A of the structure 61 contacts the support 62. Therefore, the fabricated support 62 minimizes the area of contact with the structure 61 and limits deviation of the shape of the structure 61 from the designed shape. In this manner, the minimized contact area between the structure 61 and the support 62 minimizes the area where the structure 61 and the support 62 are cut apart and improves the transparency of the structure 61.
(2-2) The support 62 is fabricated to be box-shaped under the structure 61, and an unsolidified photocurable resin 30 is disposed in a space defined at least by the structure 61 and the support 62. Therefore, the support 62, which is fabricated to minimize the area of contact with the structure 61, limits deviation of the shape of the structure 61 from the designed shape. More specifically, the structure 61 and the support 62 are fabricated to have the minimum contact area (i.e., area of edge of box-shaped support 62) that allows for the formation of the closed space 62A, in which the liquid photocurable resin 30 is disposed between the structure 61 and the support 62. Accordingly, the support 62 and the liquid photocurable resin 30 in the space 62A, which is defined between the structure 61 and the support 62, support the structure 61 and limits deviation of the shape of the structure 61 from the designed shape. Further, the contact area between the structure 61 and the support 62 is limited to only the area of the edge of the box-shaped support 62. This minimizes the area where the structure 61 and the support 62 are cut apart and improves the transparency of the structure 61.

### Third Embodiment

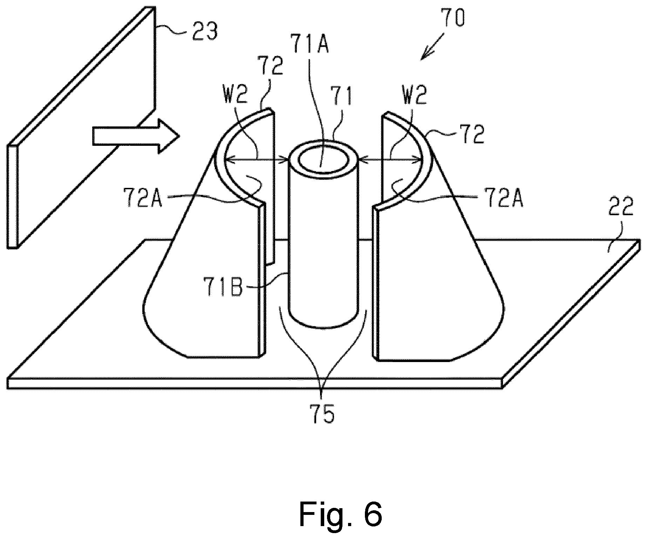

Hereinafter, a third embodiment of a method of fabricating a three-dimensional object, a modeling program, a method of generating an object model, an object fabrication apparatus, and a three-dimensional object will be described with reference to Fig. 6. In the method of fabricating a three-dimensional object of the third embodiment, the shapes of the structure and the support are different from those of the first embodiment. The following description will be focused on differences from the first embodiment.

As shown in Fig. 6, a structure 71 corresponding to a desired three-dimensional object is a cylindrical object, and is placed on the elevator table 22 with the axis of the cylinder perpendicular to the plane of the elevator table 22. A space 71A is provided inside the structure 71. By intentionally making the axial direction of the structure 71 vertical, unsolidified liquid photocurable resin 30 can be stored in the space 71A of the structure 71 during fabrication. The longitudinal direction of the structure 71 is perpendicular to the moving direction of the recoater 23. Therefore, there is a possibility that the structure may be bent in the direction vertical to the surface of the elevator table 22 due to the movement of the recoater 23 during fabrication of the structure. To address this, a support 72 is formed together with the structure 71 in order to prevent deformation of the structure 71 due to gravity or external force.

The support 72 in this embodiment includes two objects having arcuate side surfaces 72A along an outer peripheral surface 71B of the structure 71. The support 72 is fabricated at a position apart from the structure 71 by a predetermined distance W3 without contacting the structure 71. The support 72 is disposed apart from the structure 71 by a gap 75. Thus, the unsolidified liquid photocurable resin 30 is disposed in the gap 75 between the fabricated structure 71 and the support 72, so that the structure 71 is supported by the unsolidified photocurable resin 30 and the supports 72. The position separated by the predetermined distance W2 from the structure is determined based on at least one selecting from a group consisting of the intensity of the laser beam, the scanning speed, the viscosity of the photocurable resin 30, and the rigidity of the photocurable resin 30.

As shown in Fig. 2, the fabrication apparatus 1 performs additive manufacturing using three-dimensional shape data of a three-dimensional object 70 that includes the structure 71 and the support 72 generated by the slice data generation unit 53. The three-dimensional shape data of the support 72 is generated such that layers of the unsolidified photocurable resin 30 are provided between the structure 71, which is a part of the three-dimensional object being fabricated, and the support 72. The slice data generation unit 53 generates slice data as model data from the three-dimensional shape data including the three-dimensional shape data of the structure 71 and the three-dimensional shape data of the support 72. The slice data generation unit 53 outputs the generated model data to the fabrication apparatus 1.

### Method of Fabricating Three-Dimensional Object

A fabrication process performed by the fabrication apparatus 1 will be described.

When the fabrication apparatus 1 is fabricating the three-dimensional object 70 layer by layer, the liquid photocurable resin 30 is provided in the space 71A inside the structure 71. The liquid photocurable resin 30 is further provided in the gap 75 between the structure 71 and the support 72. Therefore, even when a pressure applies from the recoater 23 through the liquid photocurable resin 30 when the recoater 23 moves, the structure 71 is supported by the supports 72 and the liquid photocurable resin 30 situated in the gap 75. In this way, it is possible to prevent a deviation of the structure 71 from the designed shape.

When fabrication of the three-dimensional object 70 is completed, the supports 72 included in the three-dimensional object 70 are removed and only the structure 71 is left. The structure 71 of the three-dimensional object 70 is subjected to post-treatments such as cleaning, UV treatment and heat treatment. As described above, a desired three-dimensional shaped object is obtained.

The liquid photocurable resin 30 is provided between the structure 71 and the supports 72 during fabrication of the three-dimensional object. In this way, it is possible to support the structure 71 by the support 72, the liquid photocurable resin 30 provided in the space 71A inside the structure 71, and the liquid photocurable resin 30 provided in the gap 75 between the structure 71 and the supports 72 to prevent a deviation from the designed shape of the structure 71. Therefore, it is possible to prevent the shape of the structure 71 from deviating from the designed shape during fabrication. Further, since the structure 71 and the supports 72 are formed in a non-contact manner, it is not necessary to separate the structure 71 from the supports 72 by cutting so that damage to the structure 71 caused by cutting can be prevented. In addition, the transparency of the structure 71 can be improved.

According to the third embodiment, the following advantageous effects are obtained in addition to the effect of (1-1) above.
(3-1) The support 72 is fabricated at a position apart from the structure 71 by the predetermined distance W2 without contacting the structure 71. Therefore, it is possible to prevent the shape of the structure 71 from deviating from the designed shape while the support 72 does not contact the structure 71.
(3-2) The position separated by the predetermined distance W2 from the structure is determined based on at least one selecting from a group consisting of the intensity of the laser beam, the scanning speed, the viscosity of the photocurable resin 30, and the rigidity of the photocurable resin 30. Therefore, it is possible to fabricate the support 72 at an appropriate position and to further prevent the shape of the structure 71 from deviating from the designed shape.

### Other Embodiments

The foregoing embodiments can be modified as described below. The above embodiment and the following modifications can be implemented in combination to the extent where they are technically consistent to each other.

In the first embodiment described above, the shape of the structure 41 is not limited to the rectangular parallelepiped shape. The structure 41 may be formed in any shape provided that it stands upright on the elevator table 22 and extends in the longitudinal direction of the recoater 23. The same effect can be obtained by providing the support disposed parallel to the structure. The shape of the support may also be modified.

In the above-described first embodiment, the support 42 is disposed without contacting the structure 41. Alternatively, the support may contact at least a part of the side surface of the structure and an uncured photocurable resin may be provided between the structure and the support.

In the second embodiment described above, the shape of the structure 61 is not limited to the rectangular parallelepiped shape. The structure 61 may be formed in any shape provided that it extends parallel to the plane of the elevator table 22 and is situated apart from the elevator table 22. The same effect can be obtained by providing the support under the structure.

In the above-described second embodiment, the support 62 has a box shape and is disposed under the structure 61. Alternatively, the support may have any other shape and be disposed such that the support contacts at least a lower portion of the structure, and an uncured photocurable resin is provided between the structure and the support.

Alternatively, the support may have any other shape and be disposed such that the support partially contacts the side surface and the lower portion of the structure, and an uncured photocurable resin is provided between the structure and the support.

In the third embodiment, the shape of the structure 71 is not limited to the cylindrical shape. The same effect can be obtained as long as it has a hollowed portion thereinside and stands upright on the elevator table 22.

In each of the above-described embodiments, the fabrication apparatus 1 cures a photocurable resin with a laser beam to fabricate a shaped object. Alternatively, a surface exposure type apparatus that irradiates ultraviolet light to a surface of the photocurable resin by a projector or the like may be employed.

In each of the above-described embodiments, the fabrication apparatus 1 cures a photocurable resin with a laser beam to fabricate a shaped object. However, the invention is not limited to the photocurable resin, and may be applied to a fabrication apparatus that cures a powdery material such as a metal powder or a resin powder with laser beam. Further, a material may be irradiated with a particle beam or an electromagnetic wave as an electron beam to solidify the material.

## Claims

1. A method of fabricating a three-dimensional object (40, 60, 70) by repeating a process that includes depositing a layer of an unsolidified material (30) with a predetermined thickness on a vertically-movable elevator table (22) by a recoater (23), selectively solidifying the layer of the unsolidified material (30) by irradiating the unsolidified material (30) with ultraviolet light, a laser beam, or an electron beam, and thereafter lowering the elevator table (22) by one step, comprising:
providing a layer of the unsolidified material (30) between a structure (41, 61, 71) and a support (42, 62, 72), the structure (41, 61, 71) being a part of the three-dimensional object (40, 60, 70) being fabricated, and the support (42, 62, 72) being provided to prevent the structure (41, 61, 71) from being deformed by gravity or external force.

2. The method of fabricating a three-dimensional object (40, 60, 70) according to claim 1, wherein the support (42, 62, 72) is fabricated at a position apart from the structure (41, 61, 71) by a predetermined distance.

3. The method of fabricating a three-dimensional object (40, 60, 70) according to claim 2, wherein the position separated by the predetermined distance from the structure (41, 61, 71) is determined based on at least one selecting from a group consisting of an intensity of ultraviolet light, the laser beam, or the electron beam, a scanning speed, a viscosity of the unsolidified material (30), and a rigidity of the solidified material (30).

4. The method of fabricating a three-dimensional object (40, 60, 70) according to claim 1, wherein the support (42, 62, 72) is fabricated such that the support (42, 62, 72) partially contacts at least one of a side surface and a lower portion of the structure (42, 61, 71).

5. The method of fabricating a three-dimensional object (60) according to claim 4, wherein the support (62) is fabricated in a box shape under the structure (61) and the unsolidified material (30) is disposed in a space defined at least by the structure (61) and the support (62).

6. A modeling program causing a computer to perform the steps of:
acquiring three-dimensional shape data of a desired structure (41, 61, 71);
generating a three-dimensional shape data of a support (42, 62, 72) such that a layer of an unsolidified material (30) is provided between the structure (41, 61, 71) and the support (42, 62, 72), the support (42, 62, 72) being provided to prevent the structure (41, 61, 71) from being deformed by gravity or external force; and
generating slice data for additive manufacturing based on the three-dimensional shape data of the structure (41, 61, 71) and the support (42, 62, 72).

7. A method of generating a model of an object (40, 60, 70), comprising
acquiring three-dimensional shape data of a desired structure (41, 61, 71); and
generating a three-dimensional shape data of a support (42, 62, 72) such that a layer of an unsolidified material (30) is provided between the structure (41, 61, 71) and the support (42, 62, 72), the support (42, 62, 72) being provided to prevent the structure (41, 61, 71) from being deformed by gravity or external force.

8. A fabrication apparatus for an object (40, 60, 70), comprising:
a recoater (23) depositing a layer of an unsolidified material (30) with a predetermined thickness;
an irradiation unit (10) irradiating the unsolidified material (30) deposited by the recoater (23) with ultraviolet light, a laser beam, or an electron beam to selectively solidify the unsolidified material (30);
an elevator table (22) movable vertically and on which a desired structure (41, 61, 71) and a support (42, 62, 72) are fabricated, the support (42, 62, 72) being provided to prevent deformation of the structure (41, 61, 71) by gravity or external force; and
a control unit controlling fabrication of the structure (41, 61, 71) and the support (42, 62, 72) such that a layer of the unsolidified material (39) is provided between the structure (41, 61, 71) and the support (42, 62, 72).

9. A three-dimensional object (40, 60, 70) obtained by the steps of:
acquiring three-dimensional shape data of a desired structure (41, 61, 71);
generating a three-dimensional shape data of a support (42, 62, 72) such that a layer of an unsolidified material (30) is provided between the structure (41, 61, 71) and the support (42, 62, 72), the support (42, 62, 72) being provided to prevent the structure (41, 61, 71) from being deformed by gravity or external force;
generating slice data for additive manufacturing based on the three-dimensional shape data of the structure (41, 61, 71) and the support (42, 62, 72); and
fabricating the structure (41, 61, 71) and the support (42, 62, 72).
